# EUROPEAN PATENT APPLICATION

(11) **EP 1 528 206 A2**
(43) Date of publication of application: **04.05.2005**
(21) Application number: 04380187.7
(22) Date of filing: 23.09.2004
(51) Int. Cl.: E05F 11/48

(54) **Fastening device for pivotally fastening of a pulley**

(30) Priority: 31.10.2003 ES 200302476 U
(71) Applicant: Daumal Castellon, Melchor, 08013 Barcelona (ES)
(72) Inventor: Daumal Castellon, Melchor, 08013 Barcelona (ES)
(74) Representative: Morgades Manonelles, Juan Antonio

(57) **Abstract**

The pulley guides a driving cable in a power window device of a motor vehicle. The fastening device comprises a fastening member extending through said pulley and a threaded shaft extending through said fastening member for attaching the rail of the power window device with said pulley to the vehicle door. At least one end of said shaft is adapted to be deformed in such a way that after being subjected to a compressive force said pulley is axially fixed, but free of rotating, relative to the rail of the power window device. The threaded shaft has a tapered end to be fitted inside said fastening member, which is also shaped as having a complementary tapered configuration.

The invention provides a more effective and cost effective solution with regard to conventional rivet-and-sleeve solutions for securing the pulley to the rail of a power window device.

## Description

The present invention relates, as stated in its title, to a device for pivotally fastening a pulley. More particularly, the invention refers to a notably effective device intended for pivotally fastening a drawing pulley for the driving cable in a power window device of a motor vehicle to the rail of said power window device. With the fastening device of the present invention a maximum security and effectiveness are achieved as well as many advantages as it will be detailed hereinafter in the present specification.

Drawing pulleys of the driving cable in power window devices are axially retained but allowed to be rotated in the rail of a power window device. Retention of the pulley or wheel in the rail is typically carried out by using a rivet and a sleeve is usually arranged for taking up tolerances as the pulley is rotated and for facilitating the rotary motion thereof during operation.

The invention provides an alternative for securing the pulley of the driving cable of the power window device of a motor vehicle in such a way that it may be allowed to be rotated, which involves a more effective and cost effective solution with regard to the conventional rivet-and-sleeve solution.

Specifically, the invention provides retaining the pulley or wheel axially in the rail of the power window device through a fastening device. Said fastening device substantially comprises a fastening member made of a deformable and corrosion-insulating material, such as Zamak. The deformable fastening member of the device that is herein described according to the invention extends centrally through of pulley of the power window device. A threaded shaft extends through the central portion of said fastening member and serves the purpose of fixing the rail with the pulley to the vehicle door. Said threaded shaft is provided with a tapered end. The tapered configuration of the threaded shaft fits inside said fastening piece, which is also shaped in a complementary tapered configuration.

One end of said threaded shaft is adapted to be deformed when subjected to a compressive force, such as the impact of a stamping die or similar process known in the art. As dies impact on the threaded shaft in the stamping process, the end will be deformed in such a way that the pulley will be axially fixed relative to the rail of the power window device and allowed to be rotated. Besides the end of said threaded shaft, one end of the fastening member is also preferably deformed with the purpose of fixing the pulley axially relative to the rail of the power window device but allowed of being rotated so that guiding of the driving cable is thus permitted.

The invention also envisages the possibility that instead of deforming the lower end of the fastening member is an inner portion of the rail that is deformed, besides said end of said threaded shaft as noted above. In this case, the fastening member is provided additionally with a toothed lower crown or having peripheral slots for improving retention of the assembly. Deformation of the fastening member is carried out by using a die having a protrusion, such as a rounded rib forming a circular crown on the rail after impact. Said circular crown formed in said portion of the rail allows the axial fastening member of the pulley to be held in position. The end of the threaded shaft becomes deformed too as it has been noted above through a conventional stamping die.

The features and the advantages of the fastening device of the present invention will be clearer from the detailed description of a preferred embodiment thereof which will be given hereinafter by way of non limitative example with reference to the accompanying drawings, in which:
Fig. 1 is a cutaway elevational view of an embodiment of the fastening device of the invention; and
Fig. 2 is a cutaway elevational view of a further embodiment of the fastening device of the invention.

Reference numerals used to define the different parts in the embodiments of the invention are as follows:
(C) driving cable of the power window device;
   (1) fastening device;
   (2) pulley;
   (3) rail;
   (4) fastening member;
   (5) threaded shaft;
   (6, 7) threaded shaft ends;
   (8) stamping die;
   (9) lower end of the fastening member;
   (10) lower portion of the rail of the power window device;
   (11) die protrusion;
   (12) toothed lower crown of the fastening member; and
   (13) step of the fastening member.

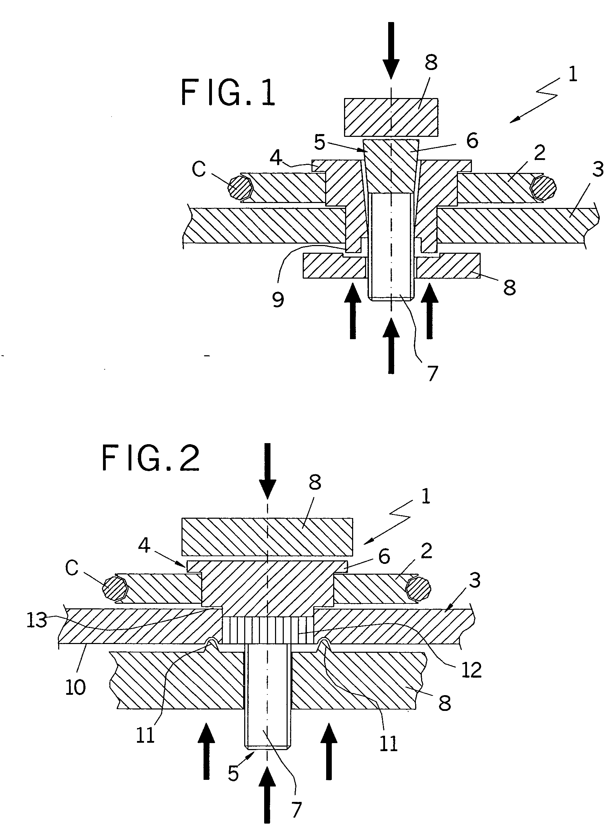

Referring to Figs. 1 and 2 of the drawings herein enclosed in the present specification by way of example, there is provided a fastening device (1) for axially retaining a pulley (2) so that it is free of rotating and which drives a driving cable (C) of a power window device in a motor vehicle to the rail (3) of said power window device. The fastening device (1) comprises a deformable fastening member (4) made for example of Zamak for aluminium rails (3) with isolation properties against oxidation. The deformable fastening member (4) extends centrally through the pulley or wheel (2) of the power window device. A threaded shaft (5) having two opposed ends (6, 7) extends centrally through said deformable fastening member (4) and it serves the purpose of fixing the rail (3) with the pulley (2) to the vehicle door (not shown). The end (6) of said threaded shaft (5) has a tapered configuration, as shown in Fig. 1 of the drawings. Alternatively, the end (6) of said shaft (5) may be splined, with a hexagonal cross-section, etc. for retaining the member (4). Said tapered configuration of the end (6) of the threaded shaft (5) fits inside the fastening member (4), which is also shaped as having a tapered complementary configuration.

The end (6) of the threaded shaft (5) is adapted to be deformed under a compressive force, such as the impact of a stamping die that is schematically depicted in the figures and generally indicated at (8).

After impact of the stamping dies (8) according to the direction of the arrows, the end (6) of the threaded shaft (5) becomes deformed so that the pulley (2) is fixed axially relative to rail (3) in a the power window device of the motor vehicle so that it is free of rotating. As it can be seen in the case of Fig. 1, besides the end (6) of the threaded shaft (5), the lower end (9) of the fastening member (4) is also deformed in the stamping process due to the die configuration (8). The lower end (9) of the fastening member (4) is bent on the lower portion of the rail (3) thus retaining the member (4) axially and the threaded shaft (5) and, consequently, the pulley (2) of the power window device.

In the case of Fig. 2, apart from the deformation of the end (6) of the threaded shaft (5) the lower portion (10) of the rail (3) is also deformed as shown. In this case, the fastening member (4) has a toothed lower crown (12) or it may be provided with peripheral slots for improving retention of the assembly and as it can be seen its configuration includes a step (13) for resting on the rail (3) of the power window device.

In said Fig. 2, the lower die (8) has a protrusion (11) in the form of a rounded crown that impacts on said lower portion (10) of the rail (3) producing a complementary circular crown on the rail (3). This allows the fastening member (4) and the pulley (2) to be held in position with the further cooperation of the threaded shaft (5) as shown in Fig. 2 since the end (6) thereof will become deformed as noted above.

Once having been sufficiently described what the fastening device of the present invention consists in accordance to the enclosed drawings, it is understood that any detail modification can be introduced as appropriate, provided that variations may alter the essence of the invention as summarised in the appended claims.

## Claims

1. Fastening device (1) for pivotally fastening of a pulley (2) for a driving cable (C) in a power window device of a motor vehicle to the rail (3) of said power window device, said device (1) comprising a fastening member (4) extending centrally through said pulley (2) and a threaded shaft (5) extending centrally through said fastening member (4) for attaching said rail (3) with said pulley (2) to the vehicle door, **characterized in that** at least one end (6, 7) of said threaded shaft (5) is adapted to be deformed in such a way that after being subjected to a compressive force said pulley (2) is axially fixed, but free of rotating, relative to the rail (3) of the power window device.

2. Fastening device (1) as claimed in claim 1, **characterized in that** the end (6, 7) of said threaded shaft (5) and one end (9) of said fastening member (4) are adapted to be deformed in such a way that after being subjected to a compressive force the pulley (2) is axially fixed, but free of rotating, relative to the rail (3) of the power window device.

3. Fastening device (1) as claimed in claim 1, **characterized in that** the end (6, 7) of said threaded shaft (5) and a portion (10) of the rail (3) are adapted to be deformed in such a way that after being subjected to a compressive force the pulley (2) is axially fixed, but free of rotating, relative to the rail (3) of the power window device, said fastening member (4) comprising a toothed peripheral portion (12).

4. Fastening device (1) as claimed in any of precedent claims, **characterized in that** said threaded shaft (5) has a tapered end (6) adapted to be fitted inside said fastening member (4), which is also shaped as having a complementary tapered configuration.
